# EUROPEAN PATENT APPLICATION

(11) **EP 2 072 346 A1**
(43) Date of publication of application: **24.06.2009**
(21) Application number: 07382001.1
(22) Date of filing: 19.12.2007
(51) Int. Cl.: B60R 21/231

(54) **Optimised airbag module**

(71) Applicant: Dalphi Metal España, S.A., 28006 Madrid (ES)
(72) Inventor: Peyre, Jean-Christophe, 47151, Valladolid (ES); Martín, Roberto, 47151, Valladolid (ES); Ramos, Ramón, 47151 Valladolid (ES)
(74) Representative: Elzaburu Marquez, Alberto

(57) **Abstract**

Airbag module for an automobile vehicle with an optimized frontal shape that comprises a bag (1), said bag (1) comprising in turn at least two projections (2, 3) located in the lower part of the bag (1), which provide an optimized curved shape to this bag (1) such that, in the event of a sidelong angled collision of the automobile, the vehicle occupant does not slide outside the unfolded bag (1), as this unfolded bag (1) fits around the vehicle occupant for different positions, speeds and directions of impact.

## Description

### FIELD OF THE INVENTION

This invention refers to an airbag module used in automobiles to cushion the blows suffered by passengers in the event of angled collisions.

### BACKGROUND OF THE INVENTION

At present, vehicles include numerous passive safety devices that should jointly work together on a programmed basis at the time of a hypothetical collision, in order to minimise the risk of injury to the vehicle's occupants. The combination of different passive systems, such as airbag modules, single hull structures with programmed deformation, seats, safety belts, collapsible steering columns, etc., means that a series of accumulative tolerances are generated that are inherent to their adjustment and operation.

On the other hand, one function of the above mentioned passive systems is to ensure their proper operation and their features in a wide range of vehicle occupant positions, as well as to adapt to various collision speeds, always accounting for the different regulated and consumer configurations (EuroNcap, IIHS, etc.) of crashes on barriers and posts and the expected evolutions of these configurations in terms of increased impact speed, barrier changes, etc.

Thus, airbag modules basically consist of a folded bag that rapidly inflates by means of a gas produced by a generator when certain sensor devices detect a vehicle collision. As a result, the bag unfolds between the vehicle occupant and an area of the vehicle, protecting the occupant during the collision.

Document US 6,969,086 describes, for example, an airbag module bag for occupant protection that includes two parts - left and right - and with a rounded shape at the end. The two separate parts - left and right - that make up the bag separate from each other when this bag unfolds, forming a space between the two that is opposite the occupant of the vehicle. It is in this space where the occupant is located when the bag inflates on unfolding, such that the left and right parts of the airbag bag unfold smoothly and uniformly towards the right and left sides of the vehicle occupant in the initial stage of bag inflation.

In sidelong angled collisions, the vehicle occupants usually slide outside the area of the unfolded bag of conventional airbag modules, thereby suffering serious injuries due to the impact. Angled collisions are presently resolved by using wide bags. However a drawback of these bags is that they do not adapt to the vehicle occupants when an angled collision occurs, thus causing them serious injuries.

This invention is intended to overcome these drawbacks.

### SUMMARY OF THE INVENTION

This invention proposes an airbag module that comprises a bag, which in turn has an optimised frontal shape comprising at least two projections that, in the event of a sidelong angled collision, prevent the vehicle occupant from sliding outside the unfolded bag. Thanks to this, the airbag module bag, according to the invention, is optimised such that it fits around the vehicle occupant, in the event of an angled collision, for different positions, speeds and directions of impact, thus effectively addressing the different dictated requirements.

Other features and advantages of this invention will be found in the following detailed description of an illustrative execution of its object in relation to the accompanying figures.

### DESCRIPTION OF THE FIGURES

Figure 1 shows a drawing of an airbag module bag according to the invention.
Figure 2 shows how an airbag module bag unfolds, according to the invention, in the event of a sidelong collision of the vehicle.

### DETAILED DESCRIPTION OF THE INVENTION

According to a preferred embodiment of the invention, this invention proposes an airbag module that comprises a bag 1, which in turn has an optimised frontal shape comprising two projections 2, 3 that, in the event of a sidelong angled collision, prevent the vehicle occupant from sliding outside the unfolded bag 1. Thanks to this, the airbag module bag 1, according to the invention, is optimised such that it fits around the vehicle occupant, in the event of an angled collision, for different positions, speeds and directions of impact, thus effectively addressing the different dictated requirements. The projections 2, 3 of the bag 1 are separated on a non-continuous basis.

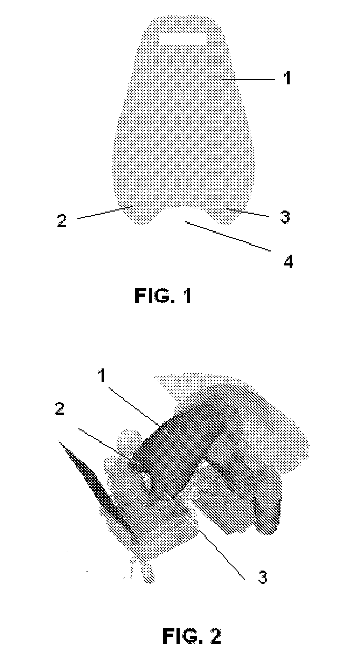

The invention consists of an airbag module bag 1 whose frontal shape is optimised to prevent the occupant from sliding outside this bag 1. The thorax-abdomen segment of the occupant's body becomes embedded into the bag 1 thanks to the curved shaped of the bag 1, accompanying the occupant during the crash in the event of a sidelong collision. The curved shape is achieved by two projections 2, 3 of the bag 1 that grip the occupant on the right and left and in a free space 4 between both projections 2, 3, where the occupant can remain during the crash of the vehicle in the event of a sidelong collision. This space 4 fits around the lower part of the occupant's body, as shown in the unfolded position in Figure 2.

The curve-shaped frontal geometry of the bag 1 is such that it prevents the vehicle occupant from sliding outside the bag 1 in an angled collision.

Some modifications included within the scope defined by the following claims can be added to the preferential execution described above.

## Claims

1. Airbag module for an automobile vehicle with an optimised frontal shape that comprises a bag (1), **characterised by** the fact that the bag (1) in turn comprises at least two projections (2, 3) located in the lower part of the bag (1), which provide an optimised curved shape to this bag (1) such that, in the event of a sidelong angled collision of the automobile, the vehicle occupant does not slide outside the unfolded bag (1), as this unfolded bag (1) fits around the vehicle occupant for different positions, speeds and directions of impact.

2. Airbag module for an automobile vehicle with an optimised frontal shape, according to claim 1, **characterised by** the fact that the projections (2, 3) of the bag (1) are separated from each other on a non-continuous basis, comprising a free space (4) between the two at the lower part of the bag (1), with the vehicle occupant remaining in this space (4) during the crash of the vehicle in the event of a sidelong collision.

3. Airbag module for an automobile vehicle with an optimised frontal shape, according to claim 1 or 2, **characterised by** the fact that the frontal curve-shaped geometry of the bag (1) is such that it prevents the vehicle occupant from sliding outside the bag (1) in an angled collision.
